# EUROPEAN PATENT SPECIFICATION

(11) **EP 2 927 659 B1**
(45) Date of publication and mention of the grant of the patent: **10.01.2018**
(21) Application number: 15155164.5
(22) Date of filing: 16.02.2015
(51) Int. Cl.: G01M 5/00, G01M 11/08, G03B 37/00, G21C 17/003

(54) **SURFACE INSPECTION APPARATUS FOR STRUCTURES, AND STRUCTURE SURFACE INSPECTION METHOD**
OBERFLÄCHENPRÜFVORRICHTUNG FÜR STRUKTUREN UND STRUKTUROBERFLÄCHENPRÜFVERFAHREN
APPAREIL D'INSPECTION DE SURFACE POUR DES STRUCTURES ET PROCÉDÉ D'INSPECTION DE SURFACE DE LA STRUCTURE

(30) Priority: 31.03.2014 JP 2014072761
(43) Date of publication of application: 07.10.2015
(73) Proprietor: Hitachi, Ltd., Tokyo 100-8280 (JP)
(72) Inventor: KONISHI, Takaaki, Tokyo 100-8280 (JP); MATSUI, Tetsuya, Tokyo 100-8280 (JP); NAGASHIMA, Yoshiaki, Tokyo, 100-8280 (JP); NAKANO, Hiroyuki, Tokyo 100-8280 (JP); MIZOTA, Hirohisa, Tokyo 100-8280 (JP)
(74) Representative: MERH-IP Matias Erny Reichl Hoffmann Patentanwälte PartG mbB

(56) References cited:
- WO-A1-2009/037914
- JP-A- H0 642 300
- RICCO ET AL: "Nature of pressure waves induced by a high-speed train travelling through a tunnel", JOURNAL OF WIND ENGINEERING AND INDUSTRIAL AERODYNAMICS, ELSEVIER, AMSTERDAM, NL, vol. 95, no. 8, 10 July 2007 (2007-07-10), pages 781-808, XP022145074, ISSN: 0167-6105, DOI: 10.1016/J.JWEIA.2007.01.008

## Description

### BACKGROUND OF THE INVENTION

### 1. Field of the Invention

The present invention relates to apparatuses and methods for inspecting surfaces of such structures as the elements that constitute infrastructure.

### 2. Description of the Related Art

Tunnels and other structural elements that constitute social infrastructure need adequate maintenance and management by routine inspection and repair since durability of these social structural elements decreases with time for reasons such as deterioration. For example, proximity visual inspection and impact hammer testing, known as related methods for inspecting such structures, are manual, thus low in efficiency, and time-consuming. For these reasons, inspection of an in-service structure in a time zone during which the structure to be inspected is not being used needs to be conducted within a limited time. This poses a problem with a decrease in the frequency of the inspection, and if the inspection needs temporary suspension of the service provided by the structure, this causes another problem with a decrease in availability of the structure.

In contrast to such manual inspection methods as above, a related technique concerning a tunnel inspection apparatus which involves automatic diagnosis is disclosed in, for example, JP-1994-42300-A. In this related technique, a one-dimensional sensor camera for imaging a tunnel wall surface, set up on a vehicle that travels through the tunnel, is used to first scan the tunnel wall surface sectionally in both a traveling direction and a perpendicular direction with respect to the tunnel wall surface, then after sequentially storing the scan data thus obtained, acquire an extracted image of the tunnel wall surface, and perform the automatic diagnosis based on the image.

JP HO6 42300 A relates to a wall surface image photographing device which scans a wall surface with a primary sensor camera by way of a curved face mirror laid out in the front of the camera so as to clarify the cross section of the wall in the advancing direction and the vertical direction and accumulates the scanned cross section data in an image accumulation device.

WO 2009/037914 A1 relates to a defect detection method and system of a structure which can detect a defect called thinning and cracking which occur in the structure without destroying the structure.

RICCO ET AL: RICCO ET AL: "Nature of pressure waves induced by a highspeed train travelling through a tunnel", JOURNAL OF WIND ENGINEERING AND INDUSTRIAL AERODYNAMICS, ELSEVIER, AMSTERDAM, NL, vol. 95, no. 8, 10 July 2007 (2007-07-10), pages 781-808, XP02214507 4, ISSN: 0167-6105, DOI: 10.1016/J.JWEIA.2007.01.008 relates to numerical simulation of pressure waves generated by a train and running through a tunnel. The flow is simulated by a one-dimensional numerical code modified to include the effect of the separation bubble forming near the train head.

### SUMMARY OF THE INVENTION

The above related technique, however, has the following problems.

That is, acquiring an image using the camera mounted on a mobile body such as the vehicle requires shortening an exposure time for suppressed blurring of the image acquired. With a short exposure time, however, since high-contrast imaging is needed to discriminate, for example, between a defective region such as a cracked section, and any other defective region such as a dirty section, it becomes absolutely necessary to reduce the imaging rate (or the vehicle speed), which may cause a problem of decreased
inspection efficiency.

The present invention has been made with the above in mind, and an object of the invention is to provide a surface inspection apparatus and surface inspection method for structures, adapted to inspect a surface of a structure very
rapidly and improve inspection efficiency.

The above object is achieved by the invention according to the independent claims 1 and 3. In the present invention, the surface of a structure can be inspected very rapidly and /or inspection efficiency can be improved.

### BRIEF DESCRIPTION OF THE DRAWINGS

Fig. 1 is a diagram showing schematically an overall configuration of a surface inspection apparatus according to a first embodiment of the present invention, together with a structure to be inspected, the diagram showing the surface inspection apparatus in side view relative to a traveling direction.
Fig. 2 is another diagram showing schematically the overall configuration of the surface inspection apparatus according to the first embodiment, together with the structure to be inspected, the diagram showing the surface inspection apparatus in rear view relative to the traveling direction.
Fig. 3 is a functional block diagram that shows details of various functional blocks constituting the surface inspection apparatus according to the first embodiment.
Fig. 4 is a diagram showing an example of TDI sensor construction.
Fig. 5 is a flowchart that shows details of a surface inspection process.
Fig. 6 is a cross-sectional view showing the way the surface inspection is conducted upon a tunnel, the structure to be inspected.
Fig. 7 is a cross-sectional view showing a case in which a crack (defect) is present on the surface of the structure including a stress-induced luminescent structural member (a layer containing a stress-induced luminescent material).
Fig. 8 is another cross-sectional view showing the case that the crack (defect) is present on the surface of the structure including the stress-induced luminescent structural member (the layer containing the stress-induced luminescent material), the cross-sectional view of the structure as observed from a surface side.
Fig. 9 is a diagram showing how a luminescent region in Fig. 7 looks.
Fig. 10 is another diagram showing how the luminescent region in Fig. 8 looks.
Fig. 11 is a cross-sectional view showing a case in which a crack (defect) is present on the surface of the structure and has not yet reached the stress-induced luminescent structural member (the layer containing the stress-induced luminescent material).
Fig. 12 is another cross-sectional view showing the case that the crack (defect) is present on the surface of the structure and has not yet reached the stress-induced luminescent structural member (the layer containing the stress-induced luminescent material), the cross-sectional view of the structure as observed from a surface side.
Fig. 13 is another diagram showing how the luminescent region in Fig. 11 looks.
Fig. 14 is yet another diagram showing how the luminescent region in Fig. 12 looks.
Fig. 15 is a diagram showing an example of an image of the structure surface, acquired by an imaging device.
Fig. 16 is a diagram showing an example of an image obtained after extraction by an extracting section of an image-processing unit.
Fig. 17 is a diagram showing schematically an overall configuration of a surface inspection apparatus according to an example being useful for understanding the present invention, together with a structure to be inspected.
Fig. 18 is a functional block diagram that shows details of various functional blocks constituting the surface inspection apparatus according to the example.
Fig. 19 is a diagram representing a relationship between a mobile body and air pressure in the surface inspection apparatus according to the example.
Fig. 20 is a diagram showing schematically the overall configuration of the surface inspection apparatus in a modification of the example.
Fig. 21 is a diagram showing schematically the overall configuration of the surface inspection apparatus in another modification of the example.

### DESCRIPTION OF THE PREFERRED EMBODIMENT AND EXAMPLES

### First Embodiment

A first embodiment of the present invention will be described hereunder referring to the companying drawings.

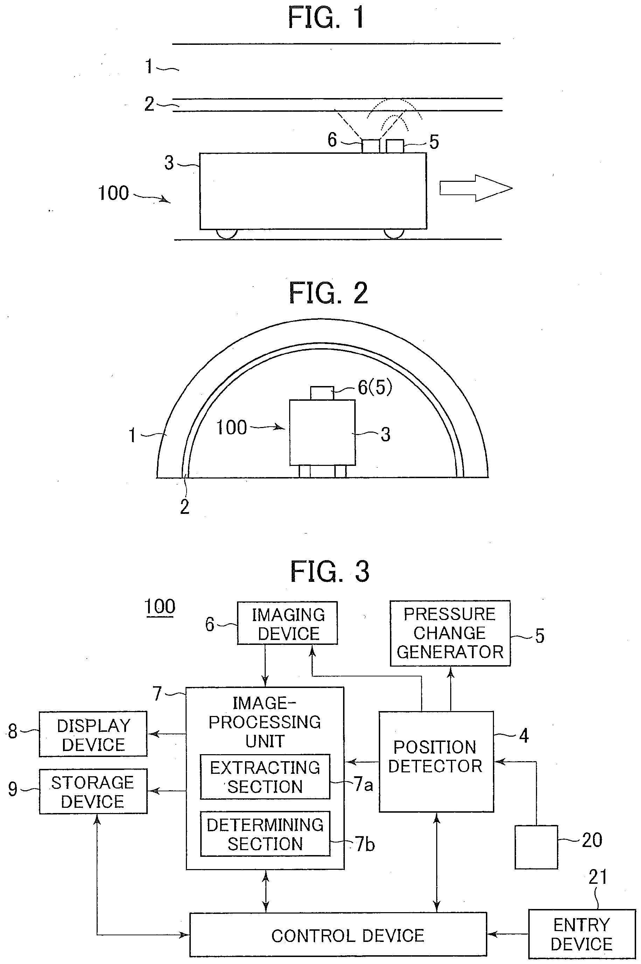

Figs. 1 and 2 are diagrams showing schematically an overall configuration of a surface inspection apparatus according to the present embodiment, together with a structure to be inspected, Fig. 1 showing the surface inspection apparatus in side view relative to a traveling direction and Fig. 2 showing the surface inspection apparatus in rear view relative to the traveling direction. Fig. 3 is a functional block diagram that shows details of various functional blocks constituting the surface inspection apparatus. In the present embodiment, a tunnel is shown and described as an example of a structure to be inspected by the surface inspection apparatus (this structure is hereinafter referred to as the structure 1).

Referring to Figs. 1 to 3, a stress-induced luminescent structural member 2 that emits light according to stress is disposed on the surface of the structure 1 to be inspected. The stress-induced luminescent structural member 2 is, for example, a layer formed with a stress-induced luminescent material contained therein.

The surface inspection apparatus 100 substantially includes the following: a mobile body 3 such as a vehicle; a position detector 4 that detects a position of the vehicle from information received from an encoder 20 synchronized with wheel rotations of the mobile body 3; a pressure change generator (device) 5 that generates a change in pressure upon the surface of the structure 1 to be inspected; an imaging device 6 that acquires an image of the surface of the structure 1; an image-processing unit 7 that performs functions such as processing the image that the imaging device 6 has acquired; a display device 8 that displays the image, inspection results, and the like; a storage device 9 used to store inspection parameters, images, inspection results, and various other information; an input device 21 used to enter the various information; and a control device 22 that controls operation of the entire surface inspection apparatus 100.

The position detector 4 transmits operating and stopping instructions to the pressure change generator 5 and the imaging device 6, based on predefined inspection schedules and data/information stored within the storage device 9 and the like, and on the vehicle position information obtained from the encoder 20. In connection with the transmission of the instructions to the pressure change generator 5 and the imaging device 6, the position information is also transmitted to other elements such as the image-processing unit 7 and control device 22, in which the image, inspection results, and other information in the surface inspection apparatus 100 are stored and processed in association with the position in the structure 1 to be inspected.

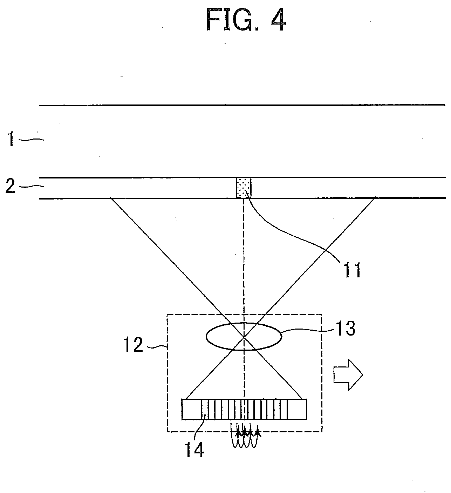

The pressure change generator 5 is a standard pressure change generator, which generates a change in stress on the surface of the structure 1 by generating the pressure change on a neighboring space of a desired region on the surface of the structure 1. In other words, the pressure change generator 5 generates a stress change on the surface of the structure 1 via a gaseous substance, such as air, that is present in a vicinity of the structure surface. The pressure change generator 5 is, for example, an air gun or gas gun that uses air or a gas to change an air pressure. Upon the stress change being caused to the stress-induced luminescent structural member 2 on the surface of the structure 1 by the pressure change generator 5, the stress-induced luminescent structural member 2 becomes luminescent according to magnitude of resulting stresses on various sections. The stresses upon the stress-induced luminescent structural member 2 are concentrated in a region having cracks or other defects on the structure 1, and consequently, this region become a strongly luminescent region, compared with peripheral regions. This luminescent region, shown as 11 in Fig. 4, will be described later herein.

The imaging device 6 uses the pressure change generator 5 to acquire an image of that region on the surface of the structure 1 where the stress change is being generated. A high-speed high-sensitivity sensor such as a TDI (Time-Delayed Integration) sensor shown in Fig. 4 is used as the imaging device 6.

Fig. 4 is a diagram showing an example of TDI sensor construction.

As shown in Fig. 4, the TDI sensor converges the luminescence in the luminescent region 11 of the stress-induced luminescent structural member 2 on the surface to be inspected, upon a light-receiving element 14 via a lens 13. When the TDI sensor reads out the quantity of electric charge generated during photoelectric conversion by the light-receiving element 14, the sensor transfers the charge to an adjacent light-receiving light. At this time, transfer timing of the charge of the light-receiving element 14 is matched with a moving speed of the TDI sensor (the imaging device 6) and the mobile body 3. In doing so, more charge is stored as often as the transfer is repeated, and hence an exposure time can be extended. This in turn allows faster and more highly sensitive imaging by the imaging device 4 set up on the mobile body 3.

The pressure change generator 5 and the imaging device 6 are arranged on the mobile body 3, and during a surface inspection process (described later herein), the former two elements move integrally with the movement of the mobile body 3 in a direction that the surface of the structure 1 extends (i.e., rightward in Fig. 1 and straight toward the reverse side of the paper in Fig. 2). While an example of imaging with a pressure change generated upward is shown and described in the present embodiment, the pressure change may be generated in any other appropriate direction such as sideways according to a particular shape of the structure 1 and/or a planned position of the inspection.

The image-processing unit 7 forms a defect detector that detects defects on the surface of the structure 1 from the image that the imaging device 6 has acquired. The image-processing unit 7 includes an extracting section 7a that extracts the image of the luminescent region 11 from the image that the imaging device 6 acquired, and a determining section 7b that uses the extracted image of the luminescent region 11 to conduct the process of determining whether defects are present (i.e., the process of detecting defects).

The extracting section 7a extracts only the more brightly imaged luminescent region 11 from the image received from the imaging device 6, by providing image processing such as binarization of luminance. Image processing by which only the luminescent region 11 is extracted may be replaced by any other processing that provides substantially the same effect as that of bright enhancement imaging, or alternatively, boundary extraction, for example, may be used. In addition or further alternatively, noise reduction such as smoothing may, as necessary, precede or follow the process of extracting the luminescent region 11 only.

The extracting section 7a also conducts sizing, the process of calculating luminescent-region information and data on a position, size, and other factors of the luminescent region 11 in a particular inspection range from the extracted image of the luminescent region 11. Since defects are estimated to be present in the luminescent region 11, the luminescent-region information and data may be reworded as defect information and data on positions, sizes (lengths and widths), and other factors of the defects in the inspection range.

The determining section 7b determines whether a defect is present or whether the defect is of a permissible level, from the luminescent-region information and data (the defect information and data) and the image that the extracting section 7a extracted. In accordance with a predetermined purpose of the inspection or predetermined criteria for the inspection, for example, depending on whether the dimensions (length and width) of the defect (i.e., the luminescent region 11) overstep the predefined criteria, the determining section 7b conducts the inspection to determine whether the defect is present or whether the defect is of the permissible level.

The information that the image-processing unit 7 has acquired, such as the pre-processing and post-processing images, luminescent-region information and data (defect information and data), and determination results, is transmitted to the display device 8 and displayed thereupon. The information is also transmitted to and stored into the storage device 9.

The control device 22 controls the operation of the entire surface inspection apparatus 100. The control device 22 also controls operation of each apparatus element in accordance with the information/data and operating instructions entered from the input device 21, programs stored into the storage device 9 beforehand, and other factors, and conducts the surface inspection process and other processes.

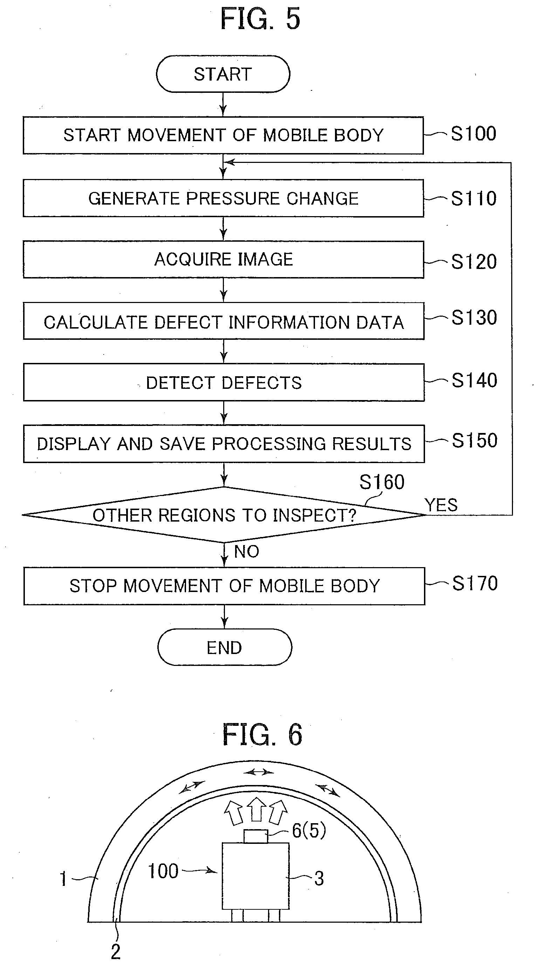

Fig. 5 is a flowchart that shows details of the surface inspection process in the present embodiment.

Referring to Fig. 5, upon a start of the surface inspection process being instructed from an operator via the input device 21 or the like, the control device 22 starts the movement of the mobile body 3 in a desired direction of the inspection (step S100). Next when the position of the mobile body 3 that the position detector 4 has detected reaches the region to be inspected in the structure 1, the control device 22 operates the pressure change generator 5 to generate a change in pressure upon the structure 1 (step S110) and then activates the imaging device 6 to acquire an image of the region in which the pressure change generator 5 is generating the pressure change (step S120). After that, the control device 22 uses the extracting section 7a of the image-processing unit 7 to calculate luminescent-region information and data (defect information and data) from the image that the imaging device 6 has acquired (step S130), and then uses the determining section 7b of the image-processing unit 7 to detect defects (step S140). Defect detection results are sent to and displayed on the display device 8, the defect detection results also being sent to and stored into the storage device 9 (step S150). The control device 22 next determines whether there exist uninspected regions planned to be subjected to the surface inspection of the structure 1 step (S160), and then if a result of the determination is Yes, process steps S110 to S150 are repeated until a determination result of No is obtained. If the determination result in step S160 is No, the control device 22 stops the operation of the mobile body 3 and other apparatus elements (step S170) to complete the process.

A relationship between the pressure change and luminescent regions in the structure during the surface inspection is described in detail below referring to Figs. 6 to 16.

Fig. 6 is a cross-sectional view showing the way the surface inspection is conducted upon a tunnel, the structure to be inspected.

As shown in Fig. 6, when the pressure change in a direction that it increases with atmospheric pressure as a reference is generated on an inner wall of the tunnel (structure 1) by the pressure change generator 5 on the mobile body 3, force that causes expansion will act upon an inner wall of a tubular structure such as a tunnel lining, resulting in tensile stresses upon the inner wall surface of the structure 1 being inspected.

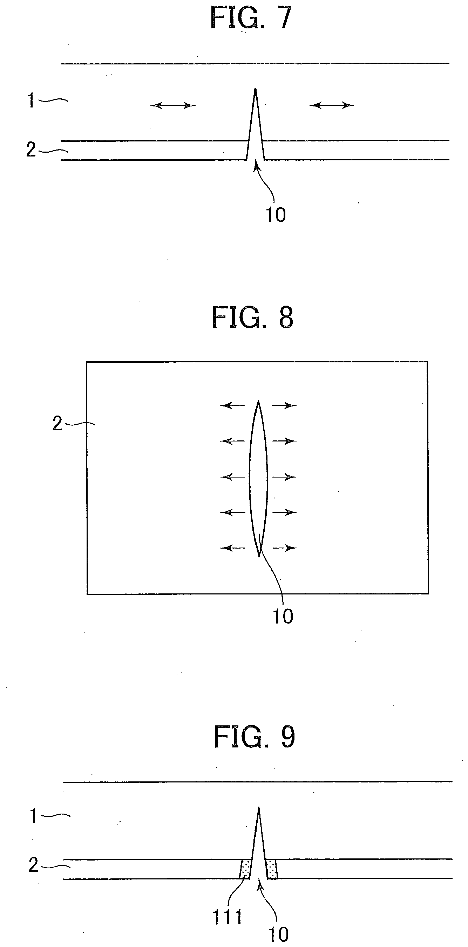

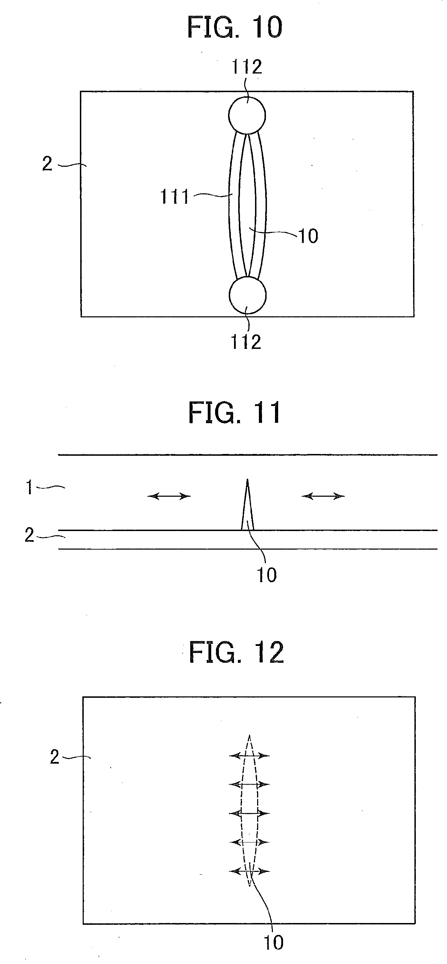

Figs. 7 and 8 show a case in which a crack (defect) is present on the surface of the structure 1 including the stress-induced luminescent structural member 2 (a layer containing a stress-induced luminescent material), Fig. 7 being a cross-sectional view of the structure and Fig. 8 being a cross-sectional view of the structure as observed from a surface side. In addition, Figs. 9 and 10 are diagrams showing how the luminescent region in Figs. 7 and 8 looks.

As shown in Figs. 7 and 8, in the presence of the crack 10 on the surface of the structure 1, when the pressure change is generated by the pressure change generator 5, tensile stresses act upon the structure 1 and thus the stress-induced luminescent structural member 2 becomes deformed as the structure 1 becomes deformed. The stresses upon the stress-induced luminescent structural member 2 at this time are distributed both uniformly and collectively along the cracked surface on which the crack 10 changes the position. As shown in Figs. 9 and 10, therefore, boundary luminescent regions 111 occur along the cracked surface of the stress-induced luminescent structural member 2. Stronger stress concentration occurs particularly at ends of the slit-like crack 10 where its opening has a shape of an acute angle, resulting in end luminescent regions 112 that become more strongly luminescent than the boundary luminescent regions 111. In other words, the stress-induced luminescent structural member 2 emits light along the crack 10 in the structure 1.

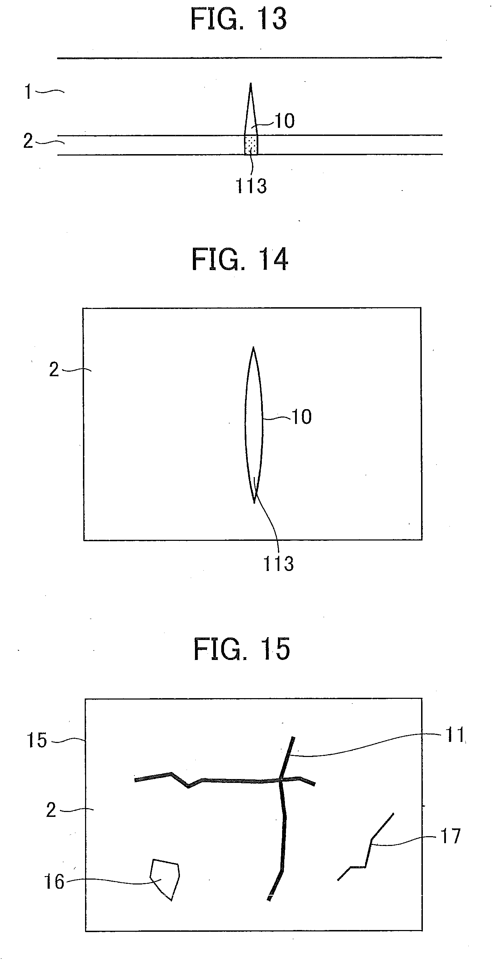

Figs. 11 and 12 show a case in which a crack (defect) is present on the surface of the structure 1 and has not yet reached the stress-induced luminescent structural member 2 (the layer containing the stress-induced luminescent material), Fig. 11 being a cross-sectional view of the structure and Fig. 12 being a cross-sectional view of the structure as observed from a surface side. In addition, Figs. 13 and 14 are diagrams showing how a luminescent region in Figs. 11 and 12 looks.

As shown in Figs. 11 and 12, in the presence of the crack 10 on the surface of the structure 1, when the pressure change is generated by the pressure change generator 5, although tensile stresses act upon the structure 1, the stress-induced luminescent structural member 2 does not become deformed while the structure 1 becomes deformed. Deformation of the crack 10 at this time causes tensile stresses to act upon a section of the stress-induced luminescent structural member 2 that shrouds the crack 10. As shown in Figs. 13 and 14, therefore, a surface luminescent region 113 occurs along the crack 10 of the stress-induced luminescent structural member 2. In other words, the stress-induced luminescent structural member 2 emits light along the crack 10 in the structure 1.

In terms of actual width of an opening, the crack 10 in the structure 1 such as a tunnel is nearly as small as between sub-micrometers and several micrometers, which is considered to be very small relative to resolution of the imaging device 6. Irrespective of whether the crack 10 has reached the stress-induced luminescent structural member 2, therefore, luminescent regions 11 (boundary luminescent regions 111, end luminescent regions 112, and surface luminescent region 113) are observed as one line along the crack 10.

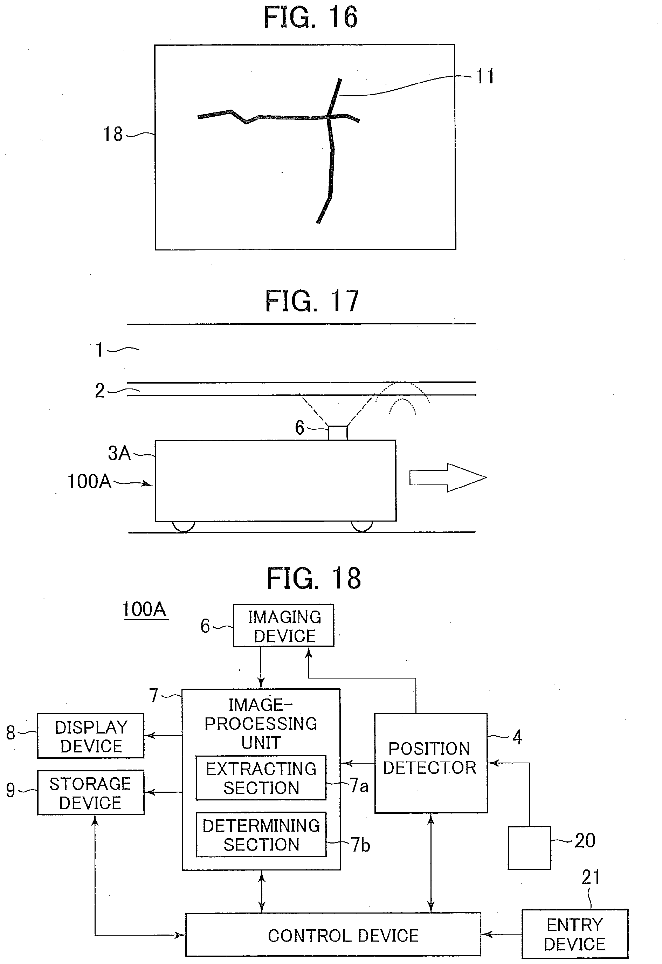

Fig. 15 is a diagram showing an example of an image of the structure surface, acquired by the imaging device 6, and Fig. 16 is a diagram showing an example of an image obtained after the extraction by the extracting section 7a of the image-processing unit 7.

As shown in Fig. 15, a luminescent region 11 with a crack 10 is represented brightly on the image 15 acquired by the imaging device 6. Other sections on the structure 1, such as a surface pattern region 16 and surface-sticking matter 17 are also represented on the image although they are relatively low in brightness relative to the luminescent region 11.

Upon execution of the extraction process (e.g., the binarization of luminance) upon the image 15 by the extracting section 7a of the image-processing unit 7, only the luminescent region 11 with the crack 10 represented brightly on the image 15 is extracted as shown- in Fig. 16.

Advantageous effects of the present embodiment having the above-described configuration are described below.

In a related technique concerning a tunnel inspection apparatus which involves automatic diagnosis, a one-dimensional sensor camera for imaging a tunnel wall surface, set up on a vehicle that travels through the tunnel, is used to first scan the tunnel wall surface sectionally in both a traveling direction and a perpendicular direction with respect to the tunnel wall surface, then after sequentially storing the scan data thus obtained, acquire an extracted image of the tunnel wall surface, and perform the automatic diagnosis based on the image. The related technique, however, has the following problems. That is, acquiring an image using the camera mounted on a mobile body such as the vehicle requires shortening an exposure time for suppressed blurring of the image acquired. With a short exposure time, however, since high-contrast imaging is needed to discriminate, for example, between a defective region such as a cracked section, and any other defective region such as a dirty section, it becomes absolutely necessary to reduce the imaging rate (or the vehicle speed), which may cause a problem of decreased inspection efficiency.

As opposed to the above, the present embodiment includes: the pressure change generator 5 that generates a change in pressure upon that surface of a structure 1 to be inspected that includes the stress-induced luminescent structural member 2 disposed to emit light according to stress, the pressure change generator generating the pressure change while moving in the direction that the surface of the structure 1 extends; the imaging device 6 that moves integrally with the pressure change generator 5 and images that region on the surface of the structure 1 where the pressure change is occurring; and the image-processing unit 7 that detects defects on the surface of the structure 1 from an image of the structure 1 that the imaging device 6 acquires. With this configuration, the present embodiment enables the surface of the structure 1 to be inspected very rapidly and inspection efficiency to be improved.

### Example

An example being useful for understanding the present invention will be described hereunder referring to Figs. 17 and 18. The present example is one in which the pressure change generator in the first embodiment is replaced by a structure of a mobile body.

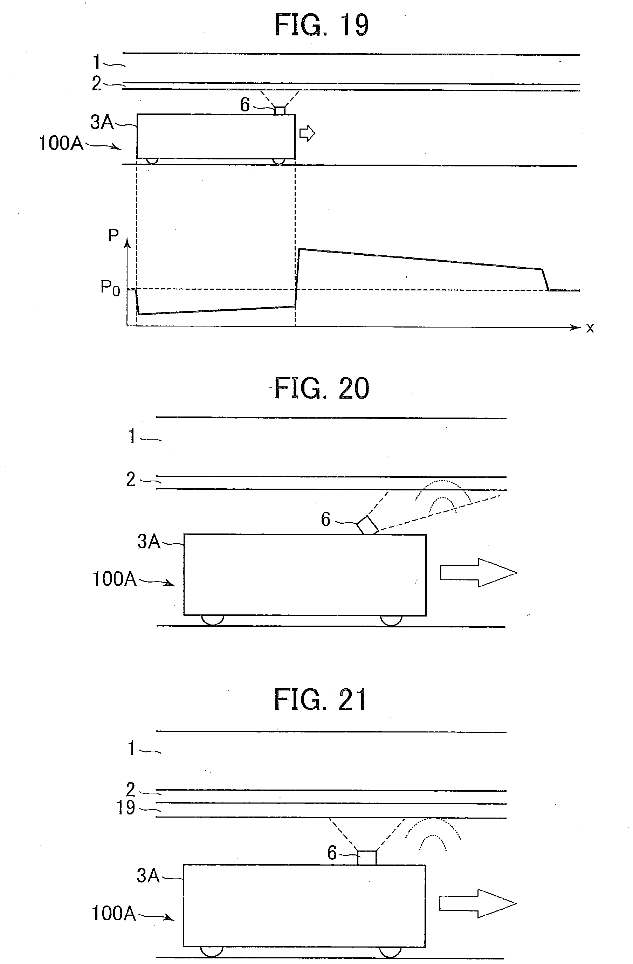

Fig. 17 is a diagram showing schematically an overall configuration of a surface inspection apparatus according to the example, together with a structure to be inspected, and Fig. 18 is a functional block diagram that shows details of various functional blocks constituting the surface inspection apparatus according to the example. Fig. 19 is a diagram representing a relationship between the mobile body and air pressure in the surface inspection apparatus according to the example. In these figures, the same reference number is assigned to each of like members in the first embodiment, and description of these members is omitted herein.

Referring to Figs. 17 and 18, the surface inspection apparatus 100A substantially includes the following: the mobile body 3A that moves at high speed, such as a vehicle; a position detector 4 that detects a position of the vehicle from information received from an encoder 20 synchronized with wheel rotations of the mobile body 3A; an imaging device 6 that acquires an image of the surface of the structure 1; an image-processing unit 7 that performs functions such as processing the image that the imaging device 6 has acquired; a display device 8 that displays images, inspection results, and the like; a storage device 9 used to store inspection parameters, the image, inspection results, and various other information; an input device 21 used to enter the various information; and a control device 22 that controls operation of the entire surface inspection apparatus 100A.

As shown in Fig. 19, pressure increases above atmospheric pressure P0 since pressure waves occur in front of the mobile body 3A, in a traveling direction that it moves at high speed. Thus, force that causes expansion will act upon an inner wall of a tubular structure such as a tunnel lining, thereby enabling a change in pressure to be caused to the structure 1. More specifically, in the case where a rapid mobile body such as a high-speed train (bullet train) rushes into a tunnel, when this train is considered to be the mobile body 3A and the tunnel wall surface as the structure 1 to be inspected, as the train passes through the tunnel, force that pushes air in a traveling direction of the train will increase an internal pressure of the tunnel. This will enable the mobile body to obtain substantially the same function as that of the pressure change generator 5 configured to generate a change in pressure in the first embodiment. Briefly, the mobile body 3A in the present example functions as a pressure change generator to generate a change in pressure upon the surface of the structure 1.

Other constituent elements are substantially the same as those of the first embodiment.

The present example having the above-described configuration offers substantially the same advantageous effects as those yielded in the first embodiment.

### Modifications of the Example

The following modifications of the example are likely.

That is, in the example, since the pressure change occurs in front of the mobile body 3A, the portion of the structure 1 that has the crack 10 begins to emit light before the mobile body 3A approaches (moves past) a certain position. Accordingly, in order for the imaging device 6 to detect the emitted light at higher efficiency, the imaging device 6 may have its field of view directed forward in the traveling direction of the mobile body 3A, as shown in Fig. 20, for example.

The emitted light can likewise be detected at higher efficiency by, as shown in Fig. 21, further adding a light-storage material containing layer 19 to a surface material of the stress-induced luminescent structural member 2 on the surface of the structure 1.

Furthermore, the emitted light can likewise be detected at higher efficiency by impregnating the stress-induced luminescent structural member 2 with a stress-induced luminescent material of a longer light-persistence time or impregnating the stress-induced luminescent structural member 2 with a light-storage material.

Features, components and specific details of the structures of the above-described embodiment may be exchanged or combined to form further embodiments optimized for the respective application. As far as those modifications are apparent for an expert skilled in the art they shall be disclosed implicitly by the above description without specifying explicitly every possible combination.

### Description of Reference Numbers

1 Structure
2 Stress-induced luminescent structural member (Layer containing a stress-induced luminescent material)
3, 3A Mobile bodies
4 Position detector
5 Pressure change generator
6 Imaging device
7 Image-processing unit
7a Extracting section
7b Determining section
8 Display device
9 Storage device
10 Crack
111 Boundary luminescent region
112 End luminescent region
113 Surface luminescent region
11 Luminescent region
12 TDI sensor
13 Lens
14 Light-receiving element
15 Image acquired (or acquired image)
16 Surface pattern region
17 Surface-sticking matter
18 Image extracted (or extracted image)
19 Light-storage material containing layer
20 Encoder
21 Input device
22 Control device
100, 100A Surface inspection apparatuses

## Claims

1. A system including a surface inspection apparatus for a structure (1) and said structure (1), the surface of the structure (1) includes a stress-induced luminescent structural member (2) disposed to emit light according to stress, wherein the stress-induced luminescent structural member (2) is a layer containing a stress-induced luminescent material, formed on the surface of the structure (1), the surface inspection apparatus comprising:
means configured to generate a change in pressure upon that surface of the structure (1) to be inspected, the pressure change generating means being configured to generate the pressure change while moving in a direction that the surface of the structure (1) extends;
an imaging device (6) configured to move integrally with the pressure change generating means and configured to image that region on the surface of the structure (1) where the pressure change is occurring; and
a unit configured to detect defects on the surface of the structure (1) from an image of the structure (1) that the imaging device (6) acquires,
a mobile body (3, 3A) that is configured to move in a direction that the surface of the structure (1) extends, wherein the pressure change generating means is a pressure change generator (5) configured to be mounted on the mobile body (3, 3A) along with the imaging device (6).

2. The system according to claim 1, wherein the unit is configured to calculate luminescent-region information and data from an image of the structure (1) that the device has acquired.

3. A surface inspection method for the structure (1) according to at least one of claims 1 or 2, comprising the steps of:
generating a change in pressure upon that surface of the structure (1);
imaging a region on the surface of the structure (1) where the pressure change is occurring; and
detecting defects on the surface of the structure (1) from an image acquired during the imaging of the surface of the structure (1).

## Patentansprüche

1. System, das eine Oberflächenprüfungsvorrichtung für eine Struktur (1) und die Struktur (1) enthält, wobei die Oberfläche der Struktur (1) ein beanspruchungsinduziertes Lumineszenzstrukturelement (2) enthält, das angeordnet ist, um Licht gemäß einer Beanspruchung zu emittieren, wobei das beanspruchungsinduzierte Lumineszenzstrukturelement (2) eine Schicht ist, die ein beanspruchungsinduziertes Lumineszenzmaterial enthält, das auf der Oberfläche der Struktur (1) gebildet ist, wobei die Oberflächenprüfungsvorrichtung Folgendes umfasst:
Mittel, die konfiguriert sind, eine Druckänderung auf der zu prüfenden Oberfläche der Struktur (1) zu erzeugen, wobei die Mittel zum Erzeugen der Druckänderung konfiguriert sind, die Druckänderung zu erzeugen, während sie sich in einer Richtung bewegen, in die sich die Oberfläche der Struktur (1) ausdehnt;
eine Bildgebungsvorrichtung (6), die konfiguriert ist, sich einteilig mit den Mitteln zum Erzeugen der Druckänderung zu bewegen, und konfiguriert ist, das Gebiet auf der Oberfläche der Struktur (1), in dem die Druckänderung auftritt, abzubilden, und
eine Einheit, die konfiguriert ist, Schadstellen auf der Oberfläche der Struktur (1) aus einem Bild der Struktur (1), das die Bildgebungsvorrichtung (6) aufnimmt, zu detektieren,
einen mobilen Körper (3, 3A), der konfiguriert ist, sich in einer Richtung zu bewegen, in der sich die Oberfläche der Struktur (1) ausdehnt, wobei die Mittel zum Erzeugen der Druckänderung ein Druckänderungsgenerator (5) sind, der konfiguriert ist, auf dem mobilen Körper (3, 3A) zusammen mit der Bildgebungsvorrichtung (6) montiert zu sein.

2. System nach Anspruch 1, wobei die Einheit konfiguriert ist, Lumineszenzgebietsinformationen und Daten aus einem Bild der Struktur (1), das die Vorrichtung aufgenommen hat, zu berechnen.

3. Oberflächenprüfungsverfahren für die Struktur (1) nach mindestens einem der Ansprüche 1 oder 2, das die folgenden Schritte umfasst:
Erzeugen einer Druckänderung auf der Oberfläche der Struktur (1);
Abbilden eines Gebiets auf der Oberfläche der Struktur (1), in dem die Druckänderung auftritt, und
Detektieren von Schadstellen auf der Oberfläche der Struktur (1) aus einem Bild, das während des Abbildens der Oberfläche der Struktur (1) aufgenommen wird.

## Revendications

1. Système incluant un appareil d'inspection de surface pour une structure (1) et ladite structure (1), la surface de la structure (1) incluant un élément structurel 2) à luminescence induite par contrainte, disposé pour émettre de la lumière en fonction de contraintes, dans lequel l'élément structurel (2) à luminescence induite par contrainte est une couche contenant un matériau à luminescence induite par contrainte, formée sur la surface de la structure (1), l'appareil d'inspection de surface comprenant :
un moyen configuré pour générer un changement de pression sur cette surface de la structure (1) qu'il s'agit d'inspecter, le moyen de génération de changement de pression étant configuré pour générer le changement de pression tout en se déplaçant dans une direction dans laquelle s'étend la surface de la structure (1) ;
un dispositif d'imagerie (6) configuré pour se déplacer de manière intégrale avec le moyen de génération de changement de pression est configuré pour prendre une image de cette région sur la surface de la structure (1) dans laquelle se produit le changement de pression ; et
une unité configurée pour détecter des défauts sur la surface de la structure (1) à partir d'une image de la structure (1) acquise par le dispositif d'imagerie (6),
un corps mobile (3, 3A) qui est configuré pour se déplacer dans une direction dans laquelle s'étend la surface (2) de la structure, dans lequel le moyen de génération de changement de pression est un générateur de changement de pression (5) configuré pour être monté sur le corps mobile (3, 3A) ensemble avec le dispositif d'imagerie (6).

2. Système selon la revendication 1, dans lequel l'unité est configurée pour calculer des informations et des données de région luminescente à partir d'une image de la structure (1) qui a été acquise par le dispositif.

3. Procédé d'inspection de surface pour la structure (1) selon l'une au moins des revendications 1 ou 2, comprenant les étapes consistant à :
générer un changement de pression sur cette surface de la structure (1) ;
prendre une image d'une région sur la surface de la structure (1) où se produit le changement de pression ; et
détecter des défauts sur la surface de la structure (1) à partir d'une image acquise pendant la prise d'image de la surface de la structure (1).
